Europäisches Patentamt

European Patent Office

Office européen des brevets

(11) Numéro de publication: **0 252 850 B1**

(12) **FASCICULE DE BREVET EUROPEEN**

(45) Date de publication de fascicule du brevet: **09.09.92**   (51) Int. Cl.⁵: **G07F 7/10**, H04L 9/00

(21) Numéro de dépôt: **87401620.7**

(22) Date de dépôt: **09.07.87**

Le dossier contient des informations techniques présentées postérieurement au dépôt de la demande et ne figurant pas dans le présent fascicule.

(54) **Procédé pour certifier l'authenticité d'une donnée échangée entre deux dispositifs connectés en local ou à distance par une ligne de transmission.**

(30) Priorité: **11.07.86 FR 8610206**

(43) Date de publication de la demande:
**13.01.88 Bulletin 88/02**

(45) Mention de la délivrance du brevet:
**09.09.92 Bulletin 92/37**

(84) Etats contractants désignés:
**AT BE CH DE ES FR GB IT LI LU NL SE**

(56) Documents cités:
**EP-A- 0 114 773**
**WO-A-84/04438**
**FR-A- 2 526 977**
**FR-A- 2 536 928**
**US-A- 4 168 396**

(73) Titulaire: **BULL CP8**
**Rue Eugène Hénaff BP 45**
**F-78190 Trappes(FR)**

(72) Inventeur: **Hazard, Michel**
**27, rue des Harias**
**F-78124 Mareil/Mauldre(FR)**

(74) Mandataire: **Siloret, Patrick et al**
**Bull S.A. Industrial Property Department**
**P.C.: HO 8M006 B.P. 193.16 121,Avenue de Malakoff**
**F-75116 Paris(FR)**

EP 0 252 850 B1

Rank Xerox (UK) Business Services

## Description

L'invention se rapporte à un procédé pour certifier l'authenticité d'une donnée échangée entre deux dispositifs connectés en local ou à distance par une ligne de transmission, chaque dispositif comprenant au moins une mémoire et des circuits de traitement.

L'invention s'applique notamment aux cartes à mémoire accouplées à distance avec un dispositif extérieur pour faire certifier par la carte l'authenticité d'une donnée transmise par le dispositif extérieur ou pour faire certifier par le dispositif extérieur l'authenticité d'une donnée transmise par la carte.

La majorité des applications qui mettent en oeuvre des cartes à mémoire font intervenir des opérations classiques d'écriture et de lecture de données dans la mémoire de la carte. La validité de ces opérations suppose l'authenticité des données échangées entre la carte et le dispositif extérieur, c'est-à-dire qu'une donnée reçue est bien conforme à la donnée émise. Cette authenticité n'est pas garantie lorsque la carte et le dispositif extérieur sont reliés à distance par une voie de transmission classique qui peut être observée par un fraudeur ayant la possibilité de modifier la donnée en cours de transmission. Ce problème est important notamment dans les applications bancaires où les données échangées concernent des crédits ou des débits de sommes d'argent.

Une solution à ce problème peut consister à chiffrer les données à transmettre, mais cette solution n'est pas entièrement satifaisante. En effet, le récepteur déchiffre la donnée pour obtenir une donnée en clair, mais il n'est pas certain que cette donnée corresponde bien à celle émise.

Un procédé pour faire certifier, par un premier dispositif, l'authenticité d'une donnée contenue à une adresse mémoire déterminée d'un second dispositif est décrit dans le document FR-A-2526977. Le premier et le second dispositif calculent chacun un résultat sur la base d'un même algorithme, prenant en compte la donnée à certifier, son adresse ou position en mémoire, et un code secret connu du premier et du second dispositif. Le résultat calculé par le second dispositif est transmis au premier pour y être comparé avec celui calculé par le premier. L'authenticité est certifiée par le premier dispositif si les deux résultats concordent.

Ce procédé implique donc que le dispositif qui effectue la certification de l'authenticité connaisse par avance l'adresse mémoire et la valeur de la donnée qu'il doit certifier. En fait, ce procédé de l'art antérieur suppose que la certification d'une donnée reçue par un dispositif soit effectuée, suite à un dialogue entre le dispositif émetteur et le dispositif récepteur de la donnée, par le dispositif émetteur lui-même.

L'invention pallie cet inconvénient et permet d'authentifier une donnée reçue comme étant non seulement conforme à la donnée émise, mais également émise par un dispositif émetteur habilité. Ainsi l'invention permet de détecter à la fois une donnée modifiée ou cours de sa transmission et une donnée émise à partir d'un dispositif émetteur non habilité.

L'invention propose donc un procédé pour certifier l'authenticité d'une donnée échangée entre deux dispositifs émetteur et récepteur reliés par une voie de transmission classique, chaque dispositif comprenant au moins une mémoire et des circuits de traitement, caractérisé en ce qu'il consiste:

- à élaborer un message chiffré M au niveau du dispositif émetteur, par mise en oeuvre d'un premier programme qui est exécuté par des premiers circuits de traitement et qui applique la fonction de chiffrement f2 d'un algorithme inversible au moins à la clé de chiffrement S2 de cet algorithme et à un premier paramètre X, de sorte que le message M est fonction d'au moins la clé de chiffrement et du premier paramètre, en ce que la clé de chiffrement S2 de l'algorithme étant préenregistrée dans la mémoire du dispositif émetteur, et le premier paramètre X étant décomposé en an moins un premier champ satisfaisant une condition prédéterminée et un second champ représentatif de la valeur de la donnée, il consiste de plus:
- à transmettre ce message M au dispositif récepteur et, par mise en oeuvre d'un second programme qui est exécuté par des seconds circuits de traitement, à appliquer la fonction de déchiffrement f1 dudit algorithme au moins à ce message M et à la clé S1 de déchiffrement préenregistrée dans la mémoire du dispositif récepteur, pour obtenir un second paramètre X' qui est donc fonction du message M et de la clé de déchiffrement;
- à décomposer le second paramètre X' en au moins un premier champ et un second champ,
  et à vérifier que le premier champ du second paramètre X' vérifie la même condition prédéterminée que le premier champ du premier paramètre X pour en déduire que la valeur de la donnée du second champ du second paramètre est égale à la valeur de la donnée du second champ du premier paramètre X.

Selon un avantage de l'invention, il est possible d'écrire à distance et en toute sécurité des informations dans un dispositif récepteur notamment constitué par un objet portatif tel qu'une carte de crédit.

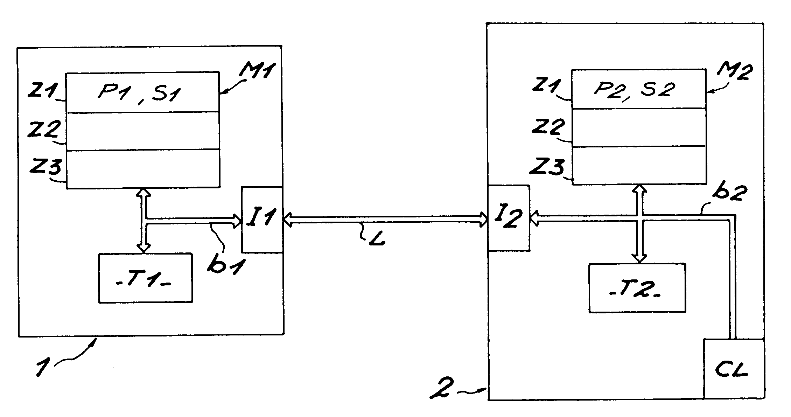

D'autres avantages, caractéristiques et détails apparaîtront à la lumière de la description explicative qui va suivre faîte en référence à la figure annexée donnée à titre d'exemple et qui représente schématiquement les principaux éléments ou circuits permettant la mise en oeuvre du procédé confirme à l'invention.

En référence à la figure, deux dispositifs électroniques (1,2) sont connectés en local ou à distance par une voie de transmission classique (L) de type électrique ou optique.

Le dispositif (1) comprend au moins une mémoire (M1), des circuits de traitement (T1) et une interface d'entréesortie (I1). Tous ces circuits sont reliés ensemble par l'intermédiaire d'un bus de liaison (b1).

Le dispositif (2) comprend au moins une mémoire (M2), des circuits de traitement (T2), un dispositif d'entrée de données tel qu'un clavier (CL) et une interface d'entréesortie (I2). Tous ces circuits sont reliés ensemble par un bus de liaison (b2).

Les mémoires (M1,M2) sont par exemple divisées en au moins deux zones de mémoire (Z1,Z2). Les informations ou données une fois enregistrées dans les zones de mémoire (Z1) sont vérrouillées afin d'être inaccessibles en lecture et en écriture depuis l'extérieur. Les informations ou données une fois enregistrées dans les zones de mémoire (Z2) ne sont accessibles qu'en lecture depuis l'extérieur. Par contre, toutes les informations enregistrées dans les zones de mémoire (Z1, Z2) sont librement accessibles en interne par les circuits de traitement. Les mémoires (M1, M2) comprennent généralement en plus une zone de travail (Z3) pour le stockage d'informations intermédiaires au cours des opérations exécutées par les circuits de traitement.

A titre d'exemple, le dispositif (1) est constitué par un objet portatif tel qu'une carte, alors que le dispositif (2) est représentatif d'un dispositif extérieur susceptible de dialoguer avec une carte temporairement accouplée à ce dispositif extérieur. Le dialogue qui va s'établir entre la carte et le dispositif permet normalement d'aboutir à la délivrance d'un service ou à une autorisation d'accès par l'intermédiaire de circuits complémentaires non représentés et dont la nature est fonction de l'application envisagée.

Tout dialogue implique nécessairement un échange d'informations et on va supposer que le dispositif extérieur (2) est amené à transmettre une donnée (d) à la carte (1).

Une première mesure de sécurité consiste à ne pas transmettre en clair la donnée (d) qui va être chiffrée avant transmission d'une manière telle que la carte (1) va être capable de pouvoir certifier que la donée déchiffrée est bien conforme à la donnée (d) émise.

La donnée (d) peut être une donnée résultant d'un calcul exécuté par les circuits de traitement (T2) du dispositif extérieur (2) ou une donnée entrée au clavier (CL) du dispositif extérieur (2) et éventuellement prétraitée par les circuits de traitement (T2).

Le chiffrement de la donnée (d) est obtenu par un programme (P2) préenregistré dans la zone de mémoire (Z1) de la mémoire (M2) et exécuté par les circuits de traitement (T2). Ce programme (P2) est la mise en oeuvre d'une fonction (f2) de chiffrement d'un algorithme inversible. Cette fonction (f2) prend au moins en compte une clé de chiffrement (S2) préenregistrée dans la zone de mémoire (Z1) de la mémoire (M2) et un paramètre (X) qui est lié à la donnée (d).

Plus précisément, le paramètre (X) est décomposé en plusieurs champs (X1, X2, ....Xn) avec au moins un de ces champs qui doit satisfaire une relation prédéterminée et au moins un champ qui est représentatif de la valeur (v) ou configuration binaire de la donnée (d).

A titre d'exemple, le paramètre (X) comprend trois champs (X1, X2, X3) avec :
- X1 = X2 = ad (d)
- X3 = v

où ad(d) est l'adresse mémoire de la carte (1) où doit être enregistrée la donnée (d) et (v) la valeur de la donnée (d).

Il est ainsi obtenu un message chiffré (M) tel que : $M = f2(X, S2)$.

Ce message (M) est transmis à la carte (1) par la voie de transmission (L). Les circuits de traitement (T1) de la carte (1) vont exécuter sur le message (M) reçu un programme (P1) préenregistré dans la zone de mémoire (Z1) de la mémoire (M1). Ce programme (P1) est la mise en oeuvre de la fonction inverse (f1) ou fonction de déchiffrement de l'algorithme inversible utilisé lors de l'opération de chiffrement par le milieu extérieur (2). Le programme (P1) déchiffre le message (M) au moyen d'une clé de déchiffrement (S1) préenregistrée dans la zone de mémoire (Z1) de la mémoire (M1) et tel que :

$$f1(M, S1) = X'$$

Le paramètre (X') ainsi obtenu est, comme le paramètre (X), décomposé en plusieurs champs (X'1, X'2, ....X'n), et les conditions ou relations qui sont satisfaites par les champs du paramètre (X) doivent également être satisfaites par les champs correspondants du paramètre (X'). En reprenant l'exemple pris précédemment, le paramètre (X') est décomposé en trois champs (X'1, X'2, X'3).

Selon l'invention, si les champs (X'1, X'2) satisfont la même relation que les champs (X1, X2), c'est-à-dire que les informations de ces champs sont identiques et égales à l'adresse (ad) de la donnée (d), la carte considère que le champ (X'3) représente bien la valeur (v) de la donnée (d) transmise par le milieu extérieur (2).

La carte (1) par l'intermédiaire de ses circuits de traitement (T1) peut alors procéder à l'écriture de la donnée (d) à l'adresse (ad) de la zone de mémoire (Z2) ou (Z3) de la mémoire (M1) de la carte (1).

Dans le cas contraire, la carte (1) considère que la valeur (v) de l'information du champ (X'3) du paramètre (X') n'est pas égale à la valeur (v) de la donnée (d) émise. Dans ces conditions, la carte (1) ne prend pas en compte le message (M) reçu sachant qu'il y a eu :
- soit une erreur dans la transmission du message (M),
- soit une modification du message (M) au cours de sa transmission,
- soit que le message (M) n'a pas été émis par un dispositif émetteur habilité si la clé de chiffrement (S2) ne correspond pas à la clé de déchiffrement (S1) de la carte (1) qui est supposée être une bonne carte.

Pour augmenter la sécurité dans la transmission de la donnée (d), le programme de chiffrement (P2) peut également prendre en compte un nombre aléatoire (E). Ainsi, une même donnée (d) sera chiffrée différemment pour éviter qu'un fraudeur puisse réutiliser un message antérieur (M).

Le nombre aléatoire (E) est fourni par la carte elle-même. Plus précisément, ce nombre est prélevé dans la zone de mémoire (Z2) ou zone de contrôle dont au moins un bit est modifié après chaque utilisation de la carte (1). Le nombre aléatoire est alors constitué par le mot de la zone de mémoire (Z1) qui contient le dernier bit modifié. Bien entendu, ce nombre (E) est transmis au milieu extérieur (2) avant l'opération de chiffrement.

En variante, le nombre aléatoire (E) peut être constitué par le contenu initial du mot situé à l'adresse (ad) de la mémoire où l'on désire écrire. Comme l'écriture d'une donnée en mémoire se fait mot par mot, l'écriture d'une donnée (d) de plusieurs mots nécessitera une transmission mot par mot selon le procédé de l'invention avec un nombre aléatoire (E) différent à chaque fois constitué par le contenu du mot à l'adresse (ad) qui est successivement modifié jusqu'à l'écriture complète de la donnée (d).

Bien entendu, l'invention s'applique en sens inverse lorsque le dispositif extérieur (2) veut certifier une donnée (d) transmise par la carte (1).

Les programmes de chiffrement (P2) et de déchiffrement (P1) précités peuvent être identiques, ce qui implique que les clés (S1) et (S2) sont également identiques. Par mesure de sécurité, ces clés doivent rester secrètes et c'est pour cette raison qu'elles sont préenregistrées dans les zones de mémoire (Z1) inaccessibles de l'extérieur.

En variante, l'algorithme précité peut être un algorithme à clé publique connu en soi.

## Revendications

1. Procédé pour certifier l'authenticité d'une donnée échangée entre deux dispositifs émetteur et récepteur reliés par une voie de transmission classique, chaque dispositif comprenant au moins une mémoire et des circuits de traitement, caractérisé en ce qu'il consiste:
   - à élaborer un message chiffré M au niveau du dispositif émetteur (2), par mise en oeuvre d'un premier programme (P2) qui est exécuté par des premiers circuits de traitement (T2) et qui applique la fonction de chiffrement f2 d'un algorithme inversible au moins à la clé de chiffrement S2 de cet algorithme et à un premier paramètre X, de sorte que le message M est fonction d'au moins la clé de chiffrement et du premier paramètre, en ce que la clé de chiffrement S2 de l'algorithme étant préenregistrée dans la mémoire (M2) du dispositif émetteur (2), et le premier paramètre X étant décomposé en au moins un premier champ (X1) satisfaisant une condition prédéterminée et un second champ (X2) représentatif de la valeur (v) de la donnée (d), il consiste de plus:
   - à transmettre ce message M au dispositif récepteur (1) et, par mise en oeuvre d'un second programme (P1) qui est exécuté par des seconds circuits de traitement (T1), à appliquer la fonction de déchiffrement f1 dudit algorithme au moins à ce message M et à la clé S1 de déchiffrement préenregistrée dans la mémoire (M1) du dispositif récepteur (1), pour obtenir un second paramètre X' qui est donc fonction du message M et de la clé de déchiffrement;
   - à décomposer le second paramètre X' en au moins un premier champ (X'1) et un second champ (X'2),
   et à vérifier que le premier champ (X'1) du second paramètre X' vérifie la même condition prédéterminée que le premier champ (X1) du premier paramètre X pour en déduire que la valeur de la donnée du second champ (X'2) du second paramètre est égale à la valeur de la donnée (d) du second champ (X2) du premier paramètre X.

**2.** Procédé selon la revendication 1, caractérisé en ce qu'il consiste à faire prendre en compte par les fonctions (f1, f2) un nombre aléatoire (E).

**3.** Procédé selon la revendication 2, caractérisé en ce qu'il consiste, lorsque le dispositif émetteur (2) ou le dispositif récepteur (1) est un objet portatif, à faire gérer le nombre aléatoire (E) par l'objet portatif en le prenant dans une zone de mémoire de contrôle (22) dont le contenu est modifié à chaque utilisation de l'objet portatif.

**4.** Procédé selon l'une des revendications précédentes, caractérisé en ce qu'il consiste à définir la condition prédéterminée précitée que doit satisfaire le premier champ (X1) du premier paramètre X, à partir de l'adresse mémoire (ad) à laquelle doit être écrite la donnée (d).

**Claims**

**1.** Method for certifying the authenticity of a data item exchanged between two transmitting and receiving devices connected by a conventional transmission channel, each device comprising at least one memory and processing circuits, characterised in that it consists of:
- writing a coded message M at the level of the transmitting device (2), by implementation of a first programme (P2) which is executed by first processing circuits (T2) and which applies the function f2 of coding a reversible algorithm at least to the coding key S2 of this algorithm and to a first parameter X, so that the message M depends on at least the coding key and the first parameter, in that the coding key S2 of the algorithm being prerecorded in the memory (M2) of the transmitting device (2), and the first parameter X being broken down into at least one first field (X1) satisfying a predetermined condition and a second field (X2) representative of the value (v) of the data item (d), it further consists of:
- transmitting this message M to the receiving device (1) and, by implementation of a second programme (PI) which is executed by second processing circuits (T1), applying the function f1 of decoding said algorithm at least to this message M and to the decoding key S1 prerecorded in the memory (M1) of the receiving device (1), in order to obtain a second parameter X' which therefore depends on the message M and the decoding key;

- breaking down the second parameter X' into at least one first field (X'1) and a second field (X'2), and verifying that the first field (X'1) of the second parameter X' verifies the same predetermined condition as the first field (X1) of the first parameter X in order to deduce therefrom that the value of the data item of the second field (X'2) of the second parameter is equal to the value of the data item (d) of the second field (X2) of the first parameter X.

**2.** Method according to claim 1, characterised in that it consists of causing a random number (E) to be taken into account by the functions (f1, f2).

**3.** Method according to claim 2, characterized in that it consists, when the transmitting device (2) or the receiving device (1) is a portable object, of causing the random number (E) to be managed by the portable object by taking it into a control memory zone (Z2) the contents of which are modified every time the portable object is used.

**4.** Method according to any of the preceding claims, characterised in that it consists of defining the above predetermined condition which must be satisfied by the first field (X1) of the first parameter X, from the memory address (ad) to which the data item (d) is to be written.

**Patentansprüche**

**1.** Verfahren zum Beurkunden der Echtheit eines Datenwerts, der zwischen einer Sende- und einer Empfangsvorrichtung ausgetauscht wird, die über einen herkömmlichen Übertragungskanal miteinander verbunden sind, wobei jede Vorrichtung über mindestens einen Speicher und Verarbeitungsschaltungen verfügt, dadurch gekennzeichnet, daß es folgende Schritte aufweist:
- Erstellen einer chiffrierten Nachricht (M) auf der Ebene der Sendevorrichtung (2) durch Abarbeiten eines ersten Programms (P2), das durch erste Verarbeitungsschaltungen (T2) ausgeführt wird und das eine Chiffrierfunktion (f2) eines nichtsingulären Algorithmus mindestens auf den Chiffrierschlüssel S2 dieses Algorithmus und auf einen ersten Parameter X in solcher Weise anwendet, daß die Nachricht M eine Funktion zumindest des Chiffrierschlüssels und des ersten Parameters ist, wobei der Chiffrierschlüssel S2 des Algorithmus im Speicher (M2) der Sendevorrichtung (2) vorabgespeichert ist und der erste Parameter X in mindestens ein erstes Feld (X1), das einer vorgegebenen Bedingung genügt, und ein zweites Feld (X2) aufgeteilt ist, das für den Wert (v) des Datenwerts (d) repräsentativ ist,
das weiterhin folgende Schritte aufweist:

- Übertragen der Nachricht M zur Empfangsvorrichtung (1) und Abarbeiten eines zweiten Programms (P1), das von zweiten Verarbeitungsschaltungen (T1) ausgeführt wird, um die Dechiffrierfunktion f1 des genannten Algorithmus zumindest auf die Nachricht M und den im Speicher (M1) der Empfangsvorrichtung (1) vorabgespeicherten Dechiffrierschlüssel S1 anzuwenden, um einen zweiten Parameter X' zu erhalten, der demgemäß eine Funktion der Nachricht M und des Dechiffrierschlüssels ist;

- Zerlegen des zweiten Parameters X' in mindestens ein erstes Feld (X'1) und ein zweites Feld (X'2) und Verifizieren, daß das erste Feld (X'1) des zweiten Parameters X' derselben vorgegebenen Bedingung genügt wie das erste Feld (X1) des ersten Parameters X, um hieraus abzuleiten, daß der Wert des Datenwerts des zweiten Feldes (X'2) des zweiten Parameters mit dem Wert des Datenwerts (d) des zweiten Feldes (X2) des ersten Parameters X übereinstimmt.

2. Verfahren nach Anspruch 1, dadurch gekennzeichnet, daß es den Schritt des Berücksichtigens einer Zufallszahl (E) bei den Funktionen (f1, f2) beinhaltet.

3. Verfahren nach Anspruch 2, dadurch gekennzeichnet, daß es dann, wenn die Sendevorrichtung (2) oder die Empfangsvorrichtung (1) ein tragbarer Gegenstand ist, den Schritt beinhaltet, eine Zufallszahl (E) durch den tragbaren Gegenstand dadurch zu erzeugen, daß er einem Steuerspeicherbereich (Z2) entnommen wird, dessen Inhalt bei jedem Gebrauch des tragbaren Gegenstandes verändert wird.

4. Verfahren nach einem der vorstehenden Ansprüche, dadurch gekennzeichnet, daß es einen Schritt des Definierens der vorstehend angegebenen vorgegebenen Bedingung aufweist, der das erste Feld (X1) des ersten Parameters X der Speicheradresse (ad) genügen muß, in die der Datenwert (d) eingeschrieben werden soll.